(19) Europäisches Patentamt
European Patent Office
Office européen des brevets

(11) EP 3 655 475 B1

(12) EUROPÄISCHE PATENTSCHRIFT

(45) Veröffentlichungstag und Bekanntmachung des Hinweises auf die Patenterteilung:
**14.01.2026 Patentblatt 2026/03**

(21) Anmeldenummer: **18740537.8**

(22) Anmeldetag: **06.07.2018**

(51) Internationale Patentklassifikation (IPC):
***C08K 5/00*** $^{(2006.01)}$ ***C08K 5/53*** $^{(2006.01)}$
***C08K 5/3492*** $^{(2006.01)}$ ***C08K 5/5313*** $^{(2006.01)}$
***C08K 5/5317*** $^{(2006.01)}$ ***C08K 7/14*** $^{(2006.01)}$
***C08L 77/00*** $^{(2006.01)}$

(52) Gemeinsame Patentklassifikation (CPC):
(C-Sets verfügbar)
**C08K 5/34928; C08K 3/013; C08K 5/00; C08K 5/0066; C08K 5/17; C08K 5/3492; C08K 5/49; C08K 5/53; C08K 7/14; C08K 13/04; C08L 77/02; C08L 77/06;** C08K 5/5313; C08K 5/5317 (Forts.)

(86) Internationale Anmeldenummer:
**PCT/EP2018/068320**

(87) Internationale Veröffentlichungsnummer:
**WO 2019/011789 (17.01.2019 Gazette 2019/03)**

(54) **FLAMMHEMMENDE GRAUE POLYAMIDZUSAMMENSETZUNGEN UND DEREN VERWENDUNG**

FLAME-RETARDANT GRAY POLYAMIDE COMPOSITIONS AND USE THEREOF

COMPOSITIONS DE POLYAMIDE IGNIFUGES DE COULEUR GRISE ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2017 DE 102017212097**

(43) Veröffentlichungstag der Anmeldung:
**27.05.2020 Patentblatt 2020/22**

(73) Patentinhaber: **Clariant International Ltd**
**4132 Muttenz (CH)**

(72) Erfinder:
- **BAUER, Harald**
**50170 Kerpen (DE)**
- **HÖROLD, Sebastian**
**86420 Diedorf (DE)**
- **SICKEN, Martin**
**51149 Köln (DE)**

(74) Vertreter: **Clariant Produkte (Deutschland) GmbH et al**
**Patent Management**
**Industriepark Höchst, G 860**
**65926 Frankfurt am Main (DE)**

(56) Entgegenhaltungen:
**EP-A1- 1 544 206**
**DE-A1- 102004 035 517**
**DE-A1- 102010 018 684**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08K 3/013, C08L 77/00;**
**C08K 5/0066, C08L 77/00;**
**C08K 5/34928, C08L 77/00;**
**C08K 5/53, C08L 77/00;**
**C08K 7/14, C08L 77/00**

## Beschreibung

Die vorliegende Erfindung betrifft flammhemmende Polyamidzusammensetzungen sowie daraus hergestellte Formteile.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugt - auch aus ökologischen Gründen - werden nicht-halogenierte Flammschutzmittel-systeme eingesetzt, die nur geringe oder keine Rauchgase bilden.

Unter diesen Flammschutzmitteln haben sich die Salze von Phosphinsäuren (Phosphinate) als besonders für thermoplastische Polymere wirksam erwiesen (DE 2 252 258 A und DE 2 447 727 A).

Darüber hinaus sind synergistische Kombinationen von Phosphinaten mit bestimmten stickstoffhaltigen Verbindungen bekannt, die in einer ganzen Reihe von Polymeren als Flammschutzmittel effektiver wirken, als die Phosphinate allein (WO-2002/28953 A1 sowie DE 197 34 437 A1 und DE 197 37 727 A1).

Aus der US 7,420,007 B2 ist bekannt, dass Dialkylphosphinate enthaltend eine geringe Menge an ausgewählten Telomeren als Flammschutzmittel für Polymere geeignet sind, wobei das Polymere bei der Einarbeitung des Flammschutzmittels in die Polymermatrix nur einem recht geringen Abbau unterliegt.

Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel, vor allem bei höheren Dosierungen, die Verarbeitungsstabilität von Kunststoffen beeinträchtigen. Es kann zu verstärktem Polymerabbau, zu Vernetzungsreaktionen, zu Ausgasungen oder Verfärbungen kommen.

Aus der WO 2014/135256 A1 sind Polyamid-Formmassen bekannt, die eine deutlich verbesserte thermische Stabilität, eine verringerte Migrationsneigung sowie ein gute elektrische und mechanische Eigenschaften aufweisen.

Auch eingefärbte Polyamidzusammensetzungen sind bereits beschrieben worden. WO 2010/089241 A1 offenbart thermoplastische Formmassen, die neben einem grau oder schwarz gefärbten faserförmigen Füllstoff ein graues oder schwarzes Farbmittel enthalten. In diesem Dokument wird erwähnt, dass als thermoplastische Kunststoffe auch Polyamide verwendet werden können. Aus EP 1 121 388 B1 sind mit Kupferkomplexen und organischen Halogenverbindungen stabilisierte Polyamidzusammensetzungen bekannt, die mit üblichen Pigmenten eingefärbt werden können. DE 43 01 541 A1 beschreibt flammgeschützte schwarz eingefärbte Polyamidformmassen, die neben Polyamid, roten Phosphor und ein Farbmittel enthalten. Schließlich sind aus der WO 2014/044471 A1 flammgeschützte Polyamide mit heller Farbe bekannt. Diese weisen eine geringe rötliche Eigenfarbe auf und lassen sich für helle und graue Anwendungen verbessert einfärben.

Beim Einsatz von rotem Phosphor oder von Kombinationen von halogenhaltigen Aromaten mit Antimontrioxid als Flammschutzmitteln und von herkömmlich zur Graufärbung verwendeten Farbmittel-Gemischen hat sich herausgestellt, dass die Graufärbung der Formmassen und Formkörper einen unerwünschten Rotstich aufweist.

Bislang fehlt es an flammgeschützten phosphinathaltigen Polyamidzusammensetzungen die alle geforderten Eigenschaften gleichzeitig erreichen, wie gute elektrische Werte (GWFI, CTI), eine Graufärbung ohne Rotstich (Farbe) sowie einen effektiven Flammschutz, gekennzeichnet durch möglichst kurze Nachbrennzeiten (UL-94, Nachbrennzeit).

Es war daher Aufgabe der vorliegenden Erfindung, flammgeschützte Polyamidzusammensetzungen auf Basis phosphinathaltiger Flammschutzsysteme zur Verfügung zu stellen, die alle vorgenannten Eigenschaften gleichzeitig aufweisen und die insbesondere eine graue Farbe ohne Rotstich und einen hohen Flammschutz, gekennzeichnet durch möglichst kurze Nachbrennzeiten, aufweisen.

Gegenstand der Erfindung sind flammhemmende Polyamidzusammensetzungen, enthaltend

- Polyamid mit einem Schmelzpunkt von kleiner gleich 290 °C, vorzugsweise von kleiner gleich 280 °C und ganz besonders bevorzugt von kleiner gleich 250 °C, als Komponente A,

- Füllstoffe und/oder Verstärkungsstoffe, vorzugsweise Glasfasern, als Komponente B,

- Phosphinsäuresalz der Formel (I) als Komponente C

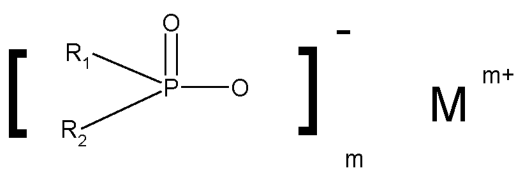

(I),

worin $R_1$ und $R_2$ Ethyl bedeuten,
M Al, Fe, $TiO_p$ oder Zn ist,
m 2 bis 3, vorzugsweise 2 oder 3, bedeutet, und

$$p = (4 - m) / 2 \text{ ist}$$

- Verbindung ausgewählt aus der Gruppe der Al-, Fe-, $TiO_p$- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D

- Phosphonsäuresalz der Formel II als Komponente E

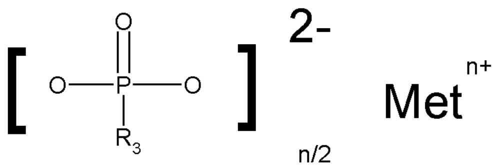

(II),

worin $R_3$ Ethyl bedeutet,
Met Al, Fe, $TiO_q$ oder Zn ist,
n 2 bis 3, vorzugsweise 2 oder 3, bedeutet, und

$$q = (4 - n) / 2 \text{ ist}$$

- Melaminpolyphosphat mit einem mittleren Kondensationsgrad von 2 bis 200 als Komponente F,

- graues Farbmittel als Komponente G, und

    - anorganisches Phosphonat als Komponente H.

In der erfindungsgemäßen Polyamidzusammensetzung beträgt der Anteil an Komponente A üblicherweise 25 bis 95 Gew.-%, vorzugsweise 25 bis 75 Gew.-%.

In der erfindungsgemäßen Polyamidzusammensetzung beträgt der Anteil an Komponente B üblicherweise 1 bis 45 Gew.-%, vorzugsweise 20 bis 40 Gew.-%.

In der erfindungsgemäßen Polyamidzusammensetzung beträgt der Anteil an Komponente C üblicherweise 1 bis 35 Gew.-%, vorzugsweise 5 bis 20 Gew.-%.

In der erfindungsgemäßen Polyamidzusammensetzung beträgt der Anteil an Komponente D üblicherweise 0,01 bis 3 Gew.-%, vorzugsweise 0,05 bis 1,5 Gew.-%.

In der erfindungsgemäßen Polyamidzusammensetzung beträgt der Anteil an Komponente E üblicherweise 0,001 bis 1 Gew.-%, vorzugsweise 0,01 bis 0,6 Gew.-%.

In der erfindungsgemäßen Polyamidzusammensetzung beträgt der Anteil an Komponente F üblicherweise 1 bis 25 Gew.-%, vorzugsweise 2 bis 10 Gew.-%.

In der erfindungsgemäßen Polyamidzusammensetzung beträgt der Anteil an Komponente G üblicherweise 0,01 bis 20 Gew.-%, vorzugsweise 0,01 bis 10 Gew.-% und insbesondere 0,1 bis 8 Gew.-%.

Komponente H liegt üblicherweise in einer Menge von 0,005 bis 10 Gew.-%, insbesondere in einer Menge von 0,02 bis 5 Gew.-% vor.

Dabei beziehen sich die Prozentangaben für die Anteile der Komponenten A bis H auf die Gesamtmenge der Polyamidzusammensetzung.

Bevorzugt werden flammhemmende Polyamidzusammensetzungen, bei denen

- der Anteil von Komponente A 25 bis 95 Gew.-%,
- der Anteil von Komponente B 1 bis 45 Gew.-%,
- der Anteil von Komponente C 1 bis 35 Gew.-%,
- der Anteil von Komponente D 0,01 bis 3 Gew.-%,
- der Anteil von Komponente E 0,001 bis 1 Gew.-%,
- der Anteil von Komponente F 1 bis 25 Gew.-%,
- der Anteil von Komponente G 0,01 bis 20 Gew.-%, und
- der Anteil von Komponente H 0,005 bis 10 Gew.-% beträgt,

wobei die Prozentangaben sich auf die Gesamtmenge der Polyamidzusammensetzung beziehen.

Besonders bevorzugt werden flammhemmende Polyamidzusammensetzungen bei denen

- der Anteil von Komponente A 25 bis 75 Gew.-%,
- der Anteil von Komponente B 20 bis 40 Gew.-%,
- der Anteil von Komponente C 5 bis 20 Gew.-%,
- der Anteil von Komponente D 0,05 bis 1,5 Gew.-%,
- der Anteil von Komponente E 0,01 bis 0,6 Gew.-%,
- der Anteil von Komponente F 2 bis 10 Gew.-%,
- der Anteil von Komponente G 0,1 bis 8 Gew.-%, und
- der Anteil von Komponente H 0,02 bis 5 Gew.-% beträgt,

wobei die Prozentangaben sich auf die Gesamtmenge der Polyamidzusammensetzung beziehen.

Bevorzugt eingesetzte Salze der Komponente C sind solche, worin $M^{m+}$ $Zn^{2+}$, $Fe^{3+}$ oder insbesondere $Al^{3+}$ bedeuten.

Bevorzugt eingesetzte Salze der Komponente D sind Zink-, Eisen- oder insbesondere Aluminiumsalze.

Bevorzugt eingesetzte Salze der Komponente E sind solche, worin $Met^{n+}$ $Zn^{2+}$, $Fe^{3+}$ oder insbesondere $Al^{3+}$ bedeuten.

Ganz besonders bevorzugt werden flammhemmende Polyamidzusammensetzungen, in denen M und Met Al bedeuten, m und n 3 sind und in denen die Verbindungen der Komponente D als Aluminiumsalze vorliegen.

Die oben beschriebenen flammhemmenden Polyamidzusammensetzungen enthalten anorganisches Phosphonat als Komponente H.

Die Verwendung der erfindungsgemäß als Komponente H eingesetzten anorganischen Phosphonate oder auch Salze der phosphorigen Säure (Phosphite) sind als Flammschutzmittel ist bekannt. So offenbart WO 2012/045414 A1 Flammschutzmittelkombinationen, die neben Phosphinsäuresalzen auch Salze der phosphorigen Säure (= Phosphite) enthalten.

Bevorzugt entspricht das anorganische Phosphonat (Komponente H) den allgemeinen Formeln (IV) oder (V)

$$[(HO)PO_2]^{2-}_{p/2}\ Kat^{p+} \qquad (IV)$$

$$[(HO)_2PO]^{-}_{p}\ Kat^{p+} \qquad (V)$$

worin Kat ein p-wertiges Kation, insbesondere ein Kation eines Alkalimetalls, Erdalkalimetalls, ein Ammoniumkation und/oder ein Kation von Fe, Zn oder insbesondere von Al einschließlich der Kationen Al(OH) oder $Al(OH)_2$ ist, und p 1, 2, 3 oder 4 bedeutet.

Bevorzugt handelt es sich bei dem anorganischen Phosphonat (Komponente H) um Aluminiumphosphit $[Al(H_2PO_3)_3]$, sekundäres Aluminiumphosphit $[Al_2(HPO_3)_3]$, basisches Aluminiumphosphit $[Al(OH)(H_2PO_3)_2{*}2aq]$, Aluminiumphosphittetrahydrat $[Al_2(HPO_3)_3{*}4aq]$, Aluminiumphosphonat, $Al_7(HPO_3)_9(OH)_6(1{,}6\text{-Hexandiamin})_{1,5}{*}12H_2O$, $Al_2(HPO_3)^3{*}xAl_2O_3{*}nH_2O$ mit x = 2,27 - 1 und/oder $Al_4H_6P_{16}O_{18}$.

Bei dem anorganischen Phosphonat (Komponente H) handelt es sich bevorzugt auch um Aluminiumphosphite der Formeln (VI), (VII) und/oder (VIII)

$$Al_2(HPO_3)_3 \times (H_2O)_q \qquad (VI),$$

wobei q 0 bis 4 bedeutet,

$$Al_{2,00}M_z(HPO_3)_y(OH)_v \times (H_2O)_w \qquad (VII),$$

wobei M Alkalimetallkationen, z 0,01 bis 1,5 und y 2,63 bis 3,5 und v 0 bis 2 und w 0 bis 4 bedeutet,

$$Al_{2,00}(HPO_3)_u(H_2PO_3)_t \times (H_2O)_s \qquad (VIII),$$

wobei u 2 bis 2,99 und t 2 bis 0,01 und s 0 bis 4 bedeutet, und/oder um Aluminiumphosphit [Al(H2PO$_3$)$_3$], um sekundäres Aluminiumphosphit [$Al_2(HPO_3)_3$], um basisches Aluminiumphosphit [$Al(OH)(H_2PO_3)_2$*2aq], um Aluminiumphosphittetrahydrat [$Al_2(HPO_3)_3$*4aq], um Aluminiumphosphonat, um $Al_7(HPO_3)_9(OH)_6$(1,6-Hexandiamin)$_{1,5}$*12$H_2O$, um $Al_2(HPO_3)^3$*x$Al_2O_3$*n$H_2O$ mit x = 2,27 - 1 und/oder $Al_4H_6P_{16}O_{18}$.

Bevorzugte anorganische Phosphonate (Komponente H) sind in Wasser unlösliche bzw. schwerlösliche Salze.

Besonders bevorzugte anorganische Phosphonate sind Aluminium-, Calcium- und Zinksalze.

Besonders bevorzugt handelt es sich bei Komponente H um ein Umsetzungsprodukt aus phosphoriger Säure und einer Aluminiumverbindung.

Besonders bevorzugte Komponenten H sind Aluminiumphosphite mit den CAS-Nummern 15099-32-8, 119103-85-4, 220689-59-8, 56287-23-1, 156024-71-4, 71449-76-8 und 15099-32-8.

Die Herstellung der bevorzugt eingesetzten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit.

Bevorzugtes Dinatriumphosphithydrat ist Brüggolen® H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdiethylphosphinat zusammen mit Aluminiumphosphit oder Zinkdiethylphosphinat zusammen mit Zinkphosphit.

In einer bevorzugten Ausführungsform enthalten die oben beschriebenen flammhemmenden Polyesterzusammensetzungen als Komponente H eine Verbindung der Formel (III)

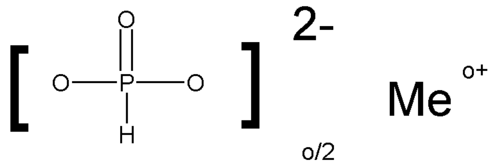
(III),

worin Me Fe, $TiO_r$, Zn oder insbesondere Al ist,
o 2 bis 3, vorzugsweise 2 oder 3, bedeutet, und

$$r = (4 - o) / 2 \text{ ist.}$$

Bevorzugt eingesetzte Verbindungen der Formel III sind solche, worin $Me^{o+}$ $Zn^{2+}$, $Fe^{3+}$ oder insbesondere $Al^{3+}$ bedeuten.

Bevorzugt sind erfindungsgemäße flammhemmende Polyamidzusammensetzungen, die einen Comparative Tracking Index, gemessen nach dem International Electrotechnical Commission Standard IEC-60112/3, von größer gleich 500 Volt aufweisen.

Ebenfalls bevorzugte erfindungsgemäße flammhemmende Polyamidzusammensetzungen erreichen eine Bewertung von V0 nach UL-94, insbesondere gemessen an Formteilen von 3,2 mm bis 0,4 mm Dicke.

Weitere bevorzugte erfindungsgemäße flammhemmende Polyamidzusammensetzungen weisen einen Glow Wire Flammability Index nach IEC-60695-2-12 von mindestens 960 °C auf, insbesondere gemessen an Formteilen von

0,75 - 3 mm Dicke.

Die erfindungsgemäßen Polyamidzusammensetzungen enthalten als Komponente A ein oder mehrere Polyamide mit einem Schmelzpunkt von kleiner gleich 290 °C. Der Schmelzpunkt wird dabei mittels Diffential-Scanning-Kalorimetrie (DSC) bei einer Aufheizrate von 10 K/Sekunde bestimmt.

Bei den Polyamiden der Komponente A handelt es sich in der Regel um aliphatische um Homo- oder Copolyamide, die sich von (cyclo)aliphatischen Dicarbonsäuren oder deren polyamid-bildenden Derivaten, wie deren Salzen, und von (cyclo)aliphatischen Diaminen oder von (cyclo)aliphatischen Aminocarbonsäuren oder deren polyamidbildenden Derivaten, wie deren Salzen, ableiten.

Bei den erfindungsgemäß als Komponente A eingesetzten Polyamiden handelt es sich um thermoplastische Polyamide.

Unter thermoplastischen Polyamiden werden in Anlehnung an Hans Domininghaus in "Die Kunststoffe und ihre Eigenschaften", 5. Auflage (1998), Seite 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß als Komponente A eingesetzten Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet. Geeignet sind auch Gemische mit Anteilen von anderen Polymeren, bevorzugt von Polyethylen, Polypropylen, ABS, wobei gegebenenfalls ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit, insbesondere wenn es sich wie hier um glasfaserverstärkte Polyamide handelt. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugt als Komponente A einzusetzende Polyamide sind teilkristalline aliphatische Polyamide, die ausgehend von aliphatischen Diaminen und aliphatischen Dicarbonsäuren und/oder cycloaliphatischen Lactamen mit wenigstens 5 Ringgliedern oder entsprechenden Aminosäuren hergestellt werden können.

Als Edukte kommen aliphatische Dicarbonsäuren, bevorzugt Adipinsäure, 2,2,4- und 2,4,4-Trimethyladipinsäure, Azelainsäure und/oder Sebazinsäure, aliphatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, Aminocarbonsäuren, bevorzugt Aminocapronsäure oder die entsprechenden Lactame in Betracht. Copolyamide aus mehreren der genannten Monomeren sind eingeschlossen. Besonders bevorzugt werden Caprolactame, ganz besonders bevorzugt wird ε-Caprolactam eingesetzt.

Bevorzugt handelt es sich bei den erfindungsgemäß eingesetzten aliphatischen Homo- oder Copolyamiden um Polyamid 12, Polyamid 4, Polyamid 4.6, Polyamid 6, Polyamid 6.6, Polyamid 6.9, Polyamid 6.10, Polyamid 6.12, Polyamid 6.66, Polyamid 7.7, Polyamid 8.8, Polyamid 9.9, Polyamid 10.9, Polyamid 10.10, Polyamid 11 oder Polyamid 12. Diese sind z. B. unter den Handelsnamen Nylon®, Fa. DuPont, Ultramid®, Fa. BASF, Akulon® K122, Fa. DSM, Zytel® 7301, Fa. DuPont; Durethan® B 29, Fa. Bayer und Grillamid®, Fa. Ems Chemie bekannt.

Besonders geeignet sind weiterhin auf PA6, PA6.6 und anderen aliphatischen Homo- oder Copolyamiden basierende Compounds, bei denen auf eine Polyamidgruppe in der Polymerkette 3 bis 11 Methylengruppen kommen.

Bevorzugt werden flammhemmende Polyamidzusammensetzungen, bei denen als Komponente A ein oder mehrere Polyamide ausgewählt ist aus der Gruppe bestehend aus PA 6, PA 6.6, PA 4.6, PA 12, PA 6.10 eingesetzt werden.

Besonders bevorzugt werden flammhemmende Polyamidzusammensetzungen, bei denen als Komponente A Polyamid 6.6 oder Polymer-Gemische aus Polyamid 6.6 und Polyamid 6 eingesetzt werden.

Ganz besonders bevorzugt werden flammhemmende Polyamidzusammensetzungen, bei denen Komponente A zu mindestens 75 Gew.-% aus Polyamid 6.6 und zu höchstens 25 Gew.-% aus Polyamid 6 besteht.

Als Komponente B werden Füllstoffe und/oder vorzugsweise Verstärkungsstoffe eingesetzt, bevorzugt Glasfasern. Es können auch Mischungen aus zwei oder mehreren unterschiedlichen Füllstoffen und/oder Verstärkungsstoffen, eingesetzt werden.

Bevorzugte Füllstoffe sind mineralische teilchenförmige Füllstoffe auf der Basis von Talk, Glimmer, Silikat, Quarz, Titandioxid, Wollastonit, Kaolin, amorphe Kieselsäuren, nanoskaligen Mineralien, besonders bevorzugt Montmorilloniten oder Nano-Böhmiten, Magnesiumcarbonat, Kreide, Feldspat,Glaskugeln und/oder Bariumsulfat. Besonders

bevorzugt werden mineralische teilchenförmige Füllstoffe auf der Basis von Talk, Wollastonit und/oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Bevorzugt sind nadelförmige Wollastonite. Bevorzugt weist das Mineral ein Länge zu Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäß als Komponente B eingesetzten nadelförmigen mineralischen Füllstoffe liegt bevorzugt bei kleiner 20 $\mu$m, besonders bevorzugt bei kleiner 15 $\mu$m, insbesondere bevorzugt bei kleiner 10 $\mu$m, bestimmt mit einem CILAS Granulometer.

Bei den erfindungsgemäß vorzugsweise eingesetzten Komponenten B handelt es sich um Verstärkungsstoffe. Dabei kann es sich beispielsweise um Verstärkungsstoffe auf der Basis von Kohlenstofffasern und/oder von Glasfasern handeln.

Der Füllstoff und/oder Verstärkungsstoff kann in einer bevorzugten Ausführungsform oberflächenmodifiziert sein, vorzugsweise mit einem Haftvermittler bzw. einem Haftvermittlersystem, besonders bevorzugt auf Silanbasis. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Bei den erfindungsgemäß als Komponente B bevorzugt eingesetzten Glasfasern kann es sich um Kurzglasfasern und/oder um Langglasfasern handeln. Als Kurz- oder Langglasfasern können Schnittfasern eingesetzt werden. Kurzglasfasern können auch in Form von gemahlenen Glasfasern zum Einsatz kommen. Daneben können Glasfasern außerdem in der Form von Endlosfasern eingesetzt werden, beispielsweise in der Form von Rovings, Monofilamenten, Filamentgarnen oder Zwirnen, oder Glasfasern können in der Form von textilen Flächengebilden eingesetzt werden, beispielsweise als Glasgewebe, als Glasgeflecht oder als Glasmatte.

Typische Faserlängen für Kurzglasfasern vor dem Einarbeiten in die Polyamidmatrix bewegen sich im Bereich von 0,05 bis 10 mm, vorzugsweise von 0,1 bis 5 mm. Nach dem Einarbeiten in die Polyamidmatrix hat sich die Länge der Glasfasern verringert. Typische Faserlängen für Kurzglasfasern nach dem Einarbeiten in die Polyamidmatrix bewegen sich im Bereich von 0,01 bis 2 mm, vorzugsweise von 0,02 bis 1 mm.

Die Durchmesser der einzelnen Fasern kann in weiten Bereichen schwanken. Typische Durchmesser der einzelnen Fasern bewegen sich im Bereich von 5 bis 20 $\mu$m.

Die Glasfasern können beliebige Querschnittsformen aufweisen, beispielsweise runde, elliptische, n-eckige oder irreguläre Querschnitte. Es können Glasfasern mit mono- oder multilobalen Querschnitten verwendet werden.

Glasfasern können als Endlosfasern oder als geschnittene oder gemahlene Glasfasern eingesetzt werden.

Die Glasfasern selbst, unabhängig von deren Querschnittfläche und deren Länge, können dabei beispielsweise ausgewählt sein aus der Gruppe der E-Glasfasern, A-Glasfasern, C-Glasfasern, D-Glasfasern, M-Glasfasern, S-Glasfasern, R-Glasfasern und/oder ECR-Glasfasern, wobei die E-Glasfasern, R-Glasfasern, S-Glasfasern und ECR-Glasfasern besonders bevorzugt sind. Die Glasfasern sind vorzugsweise mit einer Schlichte versehen, die vorzugsweise Polyurethan als Filmbildner und Aminosilan als Haftvermittler enthält.

Besonders bevorzugt eingesetzte E-Glasfasern weisen folgende chemische Zusammensetzung auf: $SiO_2$ 50-56 %; $Al_2O_3$ 12-16 %; CaO 16-25 %; MgO $\leq$ 6 %; $B_2O_3$ 6-13 %; F $\leq$ 0,7 %; $Na_2O$ 0,3-2 %; $K_2O$ 0,2-0,5 %; $Fe_2O_3$ 0,3 %.

Besonders bevorzugt eingesetzte R-Glasfasern weisen folgende chemische Zusammensetzung auf: $SiO_2$ 50-65 %; $Al_2O_3$ 20-30 %; CaO 6-16 %; MgO 5-20 %; $Na_2O$ 0,3-0,5 %; $K_2O$ 0,05-0,2 %; $Fe_2O_3$ 0,2-0,4 %, $TiO_2$ 0,1-0,3 %.

Besonders bevorzugt eingesetzte ECR-Glasfasern weisen folgende chemische Zusammensetzung auf: $SiO_2$ 57,5-58,5 %; $Al_2O_3$ 17,5-19,0 %; CaO 11,5-13,0 %; MgO 9,5-11,5.

Die erfindungsgemäß als Komponente C eingesetzten Salze von Diethylphosphinsäure sind bekannte Flammschutzmittel für polymere Formmassen.

Auch Salze von Diethylphosphinsäure mit Anteilen der erfindungsgemäß als Komponenten D und E eingesetzten Phosphinsäure- und Phosphonsäuresalze sind bekannte Flammschutzmittel. Die Herstellung dieser Stoffkombinationen wird z. B. in US 7,420,007 B2 beschrieben.

Die erfindungsgemäß eingesetzten Salze von Diethylphosphinsäure der Komponente C können geringe Mengen an Salzen der Komponente D und an Salzen der Komponente E enthalten, beispielsweise bis zu 10 Gew.-% an Komponente D, vorzugsweise 0,01 bis 6 Gew. %, und insbesondere 0,2 bis 2,5 Gew.-% davon, und bis zu 10 Gew.-% an Komponente E, vorzugsweise 0,01 bis 6 Gew. %, und insbesondere 0,2 bis 2,5 Gew.-% davon bezogen auf die Menge an Komponenten C, D und E.

Die erfindungsgemäß als Komponente E eingesetzten Salze der Ethylphosphonsäure sind als Zusätze zu Diethylphospinaten in Flammschutzmitteln für polymere Formmassen ebenfalls bekannt, beispielsweise aus WO 2016/065971 A1.

Auch die Verwendung der erfindungsgemäß als Komponente F eingesetzten Polyphosphatderivate von Melamin mit einem Kondensationsgrad von größer gleich 20 als Flammschutzmittel ist bekannt. So offenbart die DE 10 2005

016 195 A1 ein stabilisiertes Flammschutzmittel enthaltend 99 bis 1 Gew.-% Melaminpolyphosphat und 1 bis 99 Gew.-% Additiv mit Reservealkalität. In diesem Dokument wird auch offenbart, dass dieses Flammschutzmittel mit einer Phosphinsäure und/oder einem Phosphinsäuresalz kombiniert werden kann.

Bevorzugte erfindungsgemäße flammhemmende Polyamidzusammensetzungen enthalten als Komponente F ein Melaminpolyphosphat, dessen durchschnittlicher Kondensationsgrad 20 bis 200, insbesondere von 40 bis 150, beträgt.

In einem anderen bevorzugten Bereich beträgt der durchschnittliche Kondensationsgrad 2 bis 100.

Weitere bevorzugte erfindungsgemäße flammhemmende Polyamidzusammensetzungen enthalten als Komponente F ein Melaminpolyphosphat, das eine Zersetzungstemperatur von größer gleich 320 °C, insbesondere von größer gleich 360 °C und ganz besonders bevorzugt von größer gleich 400 °C aufweist.

Bevorzugt werden als Komponente F Melaminpolyphosphate eingesetzt, die aus WO 2006/027340 A1 (entsprechend EP 1 789 475 B1) und WO 2000/002869 A1 (entsprechend EP 1 095 030 B1) bekannt sind.

Bevorzugt werden Melaminpolyphosphate eingesetzt, deren durchschnittlicher Kondensationsgrad zwischen 20 und 200, insbesondere zwischen 40 und 150 liegt, und deren Melamingehalt 1,1 bis 2,0 mol, insbesondere 1,2 bis 1,8 mol pro Mol Phosphoratom beträgt.

Ebenfalls bevorzugt werden Melaminpolyphosphate eingesetzt, deren mittlerer Kondensationsgrat (Zahlenmittel) >20 ist, deren Zersetzungstemperatur größer als 320 °C ist, deren Molverhältnis von 1,3,5-Triazinverbindung zu Phosphor kleiner als 1,1, insbesondere 0,8 bis 1,0 beträgt und deren pH-Wert einer 10 %-igen Aufschlämmung in Wasser bei 25 °C 5 oder höher ist, vorzugsweise 5,1 bis 6,9.

In einer weiteren bevorzugten Ausführungsform liegen Komponenten C, D, E und F in Teilchenform vor, wobei die mittlere Teilchengröße ($d_{50}$) 1 bis 100 μm beträgt.

Als Komponente G enthalten die erfindungsgemäßen Polyamidzusammensetzungen graue Farbmittel.

Unter einem Farbmittel versteht man im Allgemeinen alle farbgebenden Stoffe nach DIN ISO 18451, welche in anorganische und organische Farbmittel sowie natürliche und synthetische einteilbar sind (s. Römpps Chemie Lexikon, 1981, 8. Auflage, S. 1237).

Man unterscheidet gemäß DIN ISO 18451 Farbstoffe und Pigmente, wobei letztere unlöslich in Kunststoffen sind, während Farbstoffe löslich sind.

Das erfindungsgemäß als Komponente G eingesetzte graue Farbmittel besteht im Allgemeinen aus einer Abmischung schwarzer und weißer Pigmente oder Farbstoffe.

Weiße Pigmente oder Farbstoffe führen zu unterschiedlichen matten Abstufungen der Farbe von Schwarzpigmenten oder von schwarzen Farbstoffen, so dass eine Graufärbung entsteht. Geeignete Weißpigmente sind allgemein bekannt, siehe z. B. R. Gächter und H. Müller, Taschenbuch der Kunststoffadditive, Carl Hanser Verlag, 1983, S. 494 bis 510. Als bevorzugte Gruppe von Pigmenten sind Weißpigmente zu nennen wie Zinkoxid, Zinksulfid, Bleiweiß ($2\ PbCO_3 \cdot Pb(OH)_2$), Lithopone, Antimonweiß, Bariumsulfat und Titandioxid. Von den beiden gebräuchlichsten Kristallmodifikationen (Rutil- und Anatas-Typ) des Titandioxids wird insbesondere die Rutilform zur Nuancierung der erfindungsgemäßen Formmassen verwendet.

Weiterhin ist es möglich, die graue Farbe der Polyamidzusammensetzungen unter Einsatz von komplementärfarbigen Pigmenten oder Farbstoffen zu erzielen.

Zu den für die Herstellung der Komponente G vorzugsweise einsetzbaren Farbstoffen und Pigmenten zählen Ruß, Graphit, Graphen, Nigrosine, Knochenkohle, schwarze Farbpigmente oder Kombinationen komplementärfarbiger roter bis gelber Pigmente mit grünen, blauen oder violetten Pigmenten oder Mischungen von ein oder mehreren dieser Verbindungen, die jeweils mit Weißpigment oder weißem Farbstoff abgemischt werden, um die graue Farbe zu erzeugen.

Zu den für die Herstellung der Komponente G geeigneten Rußen zählen insbesondere Ruße mit einem Porenvolumen (DBP Dibutylphthalat-Adsorption) gemäß DIN ISO 18451 von mindestens 30 ml/100g, vorzugsweise von mindestens 50 ml/100 g.

Weitere zur Herstellung der Komponente G bevorzugt eingesetzte Ruße weisen eine spezifische Oberfläche nach BET (gemäß ISO 4652) von mindestens 20 bis 1000 $m^2/g$, vorzugsweise von 30 bis 300 $m^2/g$ auf.

Weitere zur Herstellung der Komponente G bevorzugt eingesetzte Ruße weisen eine mittlere Primärteilchengröße von 5 bis 50 nm, insbesondere von 10 bis 35 nm auf.

Derartige Rußtypen sind z. B. unter den Marken Printex® XE2 (Evonik GmbH) oder als Ketjenblack® EC 600JD (Akzo) erhältlich sowie als Furnace Ruße, wie Printex® 90, 75, 80, 85, 95 und 60-A.

Weiterhin kann auch Graphit zur Herstellung der Komponente G verwendet werden. Dieser kann durch Mahlen zerkleinert werden. Die Partikelgröße liegt üblicherweise im Bereich von 0,01 μm bis 1 mm, bevorzugt im Bereich von 1 bis 250 μm. Graphite sind sehr weich (Mohs-Härte 1) und besitzen eine gräuliche bis schwarze Eigenfarbe.

Weitere Beispiele für Schwarzmittel, die sich zur Herstellung der Komponente G eignen, sind Graphene. Kommerziell erhältliche Graphene sind z. B. die Vor-x® Produkte (Vorbeck Materials). Die Dicke von Graphenen beträgt in der Regel von 1 bis 5 nm, der Durchmesser von 20 bis 1000 nm und die spezifische Oberfläche nach BET von 500 bis 1000 $m^2/g$ ($N_2$).

Bevorzugt zur Herstellung der Komponente G eingesetzte Schwarzmittel sind Nigrosine. Darunter versteht man im Allgemeinen eine Gruppe von schwarzen oder grauen, mit den Indulinen verwandten Phenazin-Farbstoffen (Azin-Farbstoffen) in verschiedenen Ausführungsformen. Nigrosine können wasserlöslich, fettlöslich oder spritlöslich sein. Technisch gewinnt man Nigrosine durch Erhitzen von Nitrobenzol, Anilin und salzsaurem Anilin mit metallischem Eisen und $FeCl_3$.

Nigrosin kann als freie Base oder auch als Salz (z. B. als Hydrochlorid) eingesetzt werden.

Weiterhin lassen sich Knochenkohle oder Knochenschwarz zur Herstellung der Komponente G einsetzen. Knochenkohle lässt sich durch Erhitzen entfetteten Knochenschrots unter Luftabschluss auf etwa 700 °C herstellen. Aus einer Mischung von Knochenkohle und Zucker oder Sirup entsteht bei Verkohlung mit konzentrierter Schwefelsäure das sog. Knochenschwarz oder Kölner Schwarz. Fein gemahlene Knochenkohle ist zum Einfärben von Thermoplastformmassen geeignet. Es lassen sich auch modifizierte Knochenkohlen als Komponente G einsetzen. Werden z. B. Mineralbestandteile mit Hilfe von Salzsäure aus der Knochenkohle herausgelöst, so bleibt eine schwärzere Knochenkohle übrig, die mit etwas Berliner Blau gemischt als Lackschwarz oder Pariser Schwarz erhältlich ist.

Geeignete als Komponente G einsetzbare Farbmittel werden im Allgemeinen gemäß dem Colour Index (C.I.) klassifiziert, wobei zusätzlich zu systematischen oder Trivialnamen eine eindeutige Zuordnung ermöglichende C.I.-Bezeichnung hinzugefügt wird.

Schwarze Farbpigmente, die erfindungsgemäß in Kombination mit Weißpigmenten, wie Titandioxid, Bariumsulfat oder Zinksulfid, als Komponente G eingesetzt werden können, sind z. B. Eisenoxidschwarz ($Fe_3O_4$), Spinellschwarz (Cu, (Cr, $Fe)_2O_4$), Manganschwarz (Mischung aus Mangandioxid, Siliziumdioxid und Eisenoxid), Kobaltschwarz oder Antimonschwarz.

Weiterhin ist es möglich, die graue Farbe der erfindungsgemäßen Polyamidzusammensetzung unter Einsatz von komplementärfarbigen Pigmenten zu erzielen.

Dazu werden rote bis gelbe Pigmente mit entsprechend komplementärfarbigen grünen, blauen oder violetten Pigmente oder deren Mischungen verwendet, um wie es gewünscht wird, eine graue Farbe der Polyamidzusammensetzung zu erzielen.

Als bevorzugte Pigmente seien Kupferphthalocyaninpigmente genannt, welche eine grüne oder blaue Farbe aufweisen. Die grüne Farbe wird im Allgemeinen durch Substitution von Wasserstoff durch Chloratome am macrocyclischen Tetraam in erzielt.

Weitere geeignete Pigmente sind Manganviolettpigmente (Pyrophosphate aus Ammonium und Mangan (III) der Formel $MnNH_4P_2O_7$, welche durch Variation der stöchiometrischen Zusammensetzung blauere oder rötere Töne ergeben), Ultramarinpigmente (Natrium-, Aluminiumsilikate), Blau und Grünpigmente auf der Basis von z. B. Chromoxiden oder Kobaltoxiden mit Spinellstruktur. Derartige Pigmente sind unter den Handelsnamen Heliogen®-blau, Heliogen®-grün, Sicopal®-grün, Sicopal®-blau (Marken der BASF SE) sowie als Ultramarin, Chromoxid- oder Manganviolett-Pigmente im Handel erhältlich.

Bevorzugte Pigmente sind gemäß C. I. Teil 1 Pigment blue 15, Pigment blue 15:2, Pigment blue 15:4, Pigment blue 16, Pigment blue 28, Pigment blue 29, Pigment blue 36, Pigment green 17, Pigment green 24, Pigment green 50, Pigment violet 15 und Pigment violet 16, wobei Pigment blue 15:1 und 15:3 sowie Pigment green 7 und 36 besonders bevorzugt sind.

Bevorzugt als Komponente G eingesetzt werden Abmischungen weißer Pigmente mit schwarzen Pigmenten oder Farbstoffen, wobei die weißen Pigmente ausgewählt werden aus der Gruppe Zinkoxid, Zinksulfid, Bleiweiß, Lithopone, Antimonweiß, Bariumsulfat und/oder Titandioxid und wobei die schwarzen Pigmente oder Farbstoffe ausgewählt werden aus der Gruppe Ruß, Graphit, Graphen, Nigrosine, Knochenkohle, schwarze Farbpigmente oder Kombinationen komplementärfarbiger roter bis gelber Pigmente mit grünen, blauen oder violetten Pigmenten oder Mischungen von ein oder mehreren dieser Verbindungen.

Die erfindungsgemäßen Polyamidzusammensetzungen weisen vorzugsweise eine Graufärbung auf, welche durch die Nummern 7000 bis 7048 der RAL-Farbtabelle charakterisiert ist, insbesondere durch RAL 7035.

Besonders bevorzugt als Komponente G sind Abmischungen von Titandioxid mit schwarzen Pigmenten, insbesondere mit Ruß, die insbesondere in Polyamidzusammensetzungen verwendet werden, welche im Elektronikbereich zum Einsatz gelangen (das sogenannte "Elektrograu").

Eine besonders bevorzugt eingesetzte Komponente G ist die Pigmentpaste Elektrograu RAL 7032 von Brohl Chemie.

Weitere bevorzugt eingesetzte Komponenten G sind Kombinationen von Titandioxid mit gelben, roten und schwarzen Pigmenten, die einen Farbton nach RAL 7032 ergeben. Derartige Kombinationen sind beispielsweise in DE 4104681 A1 beschrieben.

Die erfindungsgemäßen Polyamidzusammensetzungen können als Komponente I noch weitere Additive enthalten. Bevorzugte Komponenten I im Sinne der vorliegenden Erfindung sind Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmittel, Weichmacher, Verarbeitungshilfsmittel, Schlagzähmodifikatoren, von Komponente G verschiedene

Farbstoffe, von Komponente G verschiedene Pigmente und/oder weitere Flammschutzmittel, die sich von Komponenten C, D, E, F und H unterscheiden.

Hierzu gehören insbesondere Phosphate, wie etwa Melamin-Poly(Metallphosphate). Bevorzugte Metalle hierfür sind die Elemente der 2. Hauptgruppe, der 3. Hauptgruppe, der 2. Nebengruppe, der 4. Nebengruppe und der Nebengruppe VIIIa des Periodensystems sowie Cer und/oder Lanthan.

Melamin-Poly(Metallphosphate) sind bevorzugt Melamin-Poly(Zinkphosphate), Melamin-Poly(Magnsiumphosphate) und/oder Melamin-Poly(Calciumphosphate).

Bevorzugt sind (Melamin)$_2$Mg(HPO$_4$)$_2$, (Melamin)$_2$Ca(HPO$_4$)$_2$, (Melamin)$_2$Zn(HPO4)$_2$, (Melamin)$_3$Al(HPO$_4$)$_3$, (Melamin)$_2$Mg(P$_2$O$_7$), (Melamin)$_2$Ca(P$_2$O$_7$), (Melamin)$_2$Zn(P$_2$O$_7$), (Melamin)$_3$Al(P$_2$O$_7$)$_{3/2}$.

Bevorzugt sind Melamin-Poly(Metallphosphate), die bekannt sind als Hydrogenphosphato- oder Pyrophosphato-Metallate mit Komplex-Anionen, die ein vier- oder sechsbindiges Metallatom als Koordinationszentrum mit zweizähnigen Hydrogenphosphat- oder Pyrophosphat-Liganden aufweisen.

Bevorzugt sind auch Melamin-interkalierte Aluminium-, Zink- oder MagnesiumSalze von kondensierten Phosphaten, ganz besonders bevorzugt sind Bis-Melamin-zinko-diphosphat und/oder Bis-Melamin-alumotriphosphat.

Bevorzugt sind weiterhin Salze der Elemente der 2. Hauptgruppe, der 3. Hauptgruppe, der 2. Nebengruppe, der 4. Nebengruppe und der Nebengruppe VIIIa des Periodensystems sowie von Cer und/oder Lanthan mit Anionen der Oxosäuren der fünften Hauptgruppe (Phosphate, Pyrophosphate und Polyphosphate).

Bevorzugt sind Aluminiumphosphate, Aluminum monophosphate; Aluminumorthophosphate ($AlPO_4$), Aluminumhydrogenphosphat ($Al_2(HPO_4)_3$) und/oder Aluminiumdihydrogenphosphat

Bevorzugt sind auch Calciumphosphat, Zinkphosphat, Titanphosphat und/oder Eisenphosphat

Bevorzugt sind Calciumhydrogenphosphat, Calciumhydrogenphosphatdihydrat, Magnesiumhydrogenphosphat, Titaniumhydrogenphosphat (TIHC) und/oder Zinkhydrogenphosphat

Bevorzugt sind Aluminiumdihydrogenphosphat, Magnesiumdihydrogenphosphat, Calciumdihydrogenphosphat, Zinkdihydrogenphosphat, Zinkdihydrogenphosphat dihydrat und/oder Aluminumdihydrogenphosphat.

Besonders bevorzugt sind Calciumpyrophosphat, Calciumdihydrogenpyrophosphat, Magnesiumpyrophosphat Zinkpyrophosphat und/oder Aluminiumpyrophosphat.

Die vorgenannten sowie andere und ähnliche Phosphate werden beispielsweise durch die Firma J.M. Huber Corporation, USA, unter Safire® Products angeboten, hierzu gehören etwa die Typen APP Type II, AMPP, MPP, MPyP, PiPyP. PPaz, Safire® 400, Safire® 600, EDAP und andere.

Weitere Phosphate sind beispielsweise in der JP-A-2004204194, der DE-A-102007036465 und der EP-A-3133112 genannt und gehören ausdrücklich zu den einsetzbaren Komponenten I.

Bevorzugt beträgt das Mengenverhältnis der Komponenten C (Phosphinsäuresalz), F (Melaminpolyphosphat) und I (Additiv), wenn es sich bei Letzterem um die zuvor beschriebenen Metall-Phosphate handelt und insbesondere Aluminiumphosphate in der Mischung vorhanden sind:

Komponente C 98 - 54 Gew.-%,
Komponente F 33 - 1 Gew.-%,
Komponente I 13 - 1 Gew.-%,
bezogen auf insgesamt 100 Gew.-% nur dieser drei Komponenten.

Die weiteren Additive sind als Zusätze zu Polyamidzusammensetzungen an sich bekannt und können alleine oder in Mischung oder in Form von Masterbatches eingesetzt werden.

Die vorgenannten Komponenten A, B, C, D, E, F, G und H und gegebenenfalls I können in den verschiedensten Kombinationen zur erfindungsgemäßen flammgeschützten Polyamidzusammensetzung verarbeitet werden. So ist es möglich, bereits zu Beginn oder am Ende der Polykondensation oder in einem folgenden Compoundierprozess die Komponenten in die Polyamidschmelze einzumischen. Weiterhin gibt es Verarbeitungsprozesse bei denen einzelne Komponenten erst später zugefügt werden. Dies wird insbesondere beim Einsatz von Pigment- oder Additivmasterbatches praktiziert. Außerdem besteht die Möglichkeit, insbesondere pulverförmige Komponenten auf das durch den Trocknungsprozess eventuell warme Polymergranulat aufzutrommeln.

Auch können zwei oder mehrere der Komponenten der erfindungsgemäßen Polyamidzusammensetzungen vor dem Einbringen in die Polyamidmatrix durch Vermischen kombiniert werden. Dabei können herkömmliche Mischaggregate eingesetzt werden, in denen die Komponenten in einem geeigneten Mischer, z. B. 0,01 bis 10 Stunden bei 0 bis 300 °C gemischt werden.

Aus zwei oder mehreren der Komponenten der erfindungsgemäßen Polyamidzusammensetzungen können auch Granulate hergestellt werden, die anschließend in die Polyamidmatrix eingebracht werden können.

Dazu können zwei oder mehr Komponenten der erfindungsgemäßen Polyamidzusammensetzung mit Granulierhilfsmittel und/oder Bindemittel in einem geeigneten Mischer oder einem Granulierteller zu Granulaten verarbeitet werden.

Das zunächst entstehende Rohprodukt kann in einem geeigneten Trockner getrocknet beziehungsweise zum weiteren Kornaufbau getempert werden.

Die erfindungsgemäße Polyamidzusammensetzung oder zwei oder mehrere Komponenten davon kann in einer Ausführungsform durch Rollkompaktierung hergestellt werden.

Die erfindungsgemäße Polyamidzusammensetzung oder zwei oder mehrere Komponenten davon kann in einer Ausführungsform dadurch hergestellt werden, dass die Inhaltsstoffe gemischt, stranggepresst, abgeschlagen (bzw. gegebenenfalls gebrochen und klassiert) und getrocknet (und gegebenenfalls gecoated) werden.

Die erfindungsgemäße Polyamidzusammensetzung oder zwei oder mehrere Komponenten davon kann in einer Ausführungsform durch Sprühgranulierung hergestellt werden.

Die erfindungsgemäße flammgeschützte Polymerformmasse liegt bevorzugt in Granulatform, z. B. als Extrudat oder als Compound, vor. Das Granulat hat bevorzugt Zylinderform mit kreisförmiger, elliptischer oder unregelmäßiger Grundfläche, Kugelform, Kissenform, Würfelform, Quaderform, Prismenform.

Typische Längen-zu-Durchmesser-Verhältnis des Granulates betragen 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15mm, besonders bevorzugt von 2 bis 5 mm.

Gegenstand der Erfindung sind auch Formteile hergestellt aus der oben beschriebenen flammhemmenden Polyamidzusammensetzung enthaltend die Komponenten A, B, C, D, E, F, G und H und gegebenenfalls I.

Bei den erfindungsgemäßen Formteilen kann es sich um beliebige Ausformungen handeln. Beispiele dafür sind Fasern, Folien oder Formkörper, erhältlich aus den erfindungsgemäßen flammgeschützten Polyamidformmassen durch beliebige Formverfahren, insbesondere durch Spritzguss oder Extrusion.

Die Herstellung der erfindungsgemäßen flammgeschützten Polyamid-Formkörper kann durch beliebige Formverfahren erfolgen. Beispiele dafür sind Spritzgießen, Pressen, Schaumspritzgießen, Gasinnendruck-Spritzgießen, Blasformen, Foliengießen, Kalandern, Laminieren oder Beschichten bei höheren Temperaturen mit der flammgeschützten Polyamid-Formmasse.

Bei den Formteilen handelt es sich vorzugsweise sich um Spritzgussteile oder um Extrusionsteile.

Die erfindungsgemäßen flammgeschützten Polyamidzusammensetzungen eignen sich zur Herstellung von Fasern, Folien und Formkörpern, insbesondere für Anwendungen im Elektro- und Elektronikbereich.

Die Erfindung betrifft bevorzugt die Verwendung der erfindungsgemäßen flammgeschützten Polyamidzusammensetzungen in oder für Steckverbinder, stromberührten Teilen in Stromverteilern (FI-Schutz), Platinen, Vergussmassen, Stromsteckern, Schutzschaltern, Lampengehäusen, LED Gehäusen, Kondensatorgehäusen, Spulenkörpern und Ventilatoren, Schutzkontakten, Steckern, in/auf Platinen, Gehäusen für Stecker, Kabeln, flexiblen Leiterplatten, Ladekabeln für Handys, Motorabdeckungen oder Textilbeschichtungen.

Die Erfindung betrifft ebenfalls bevorzugt die Verwendung der erfindungsgemäßen flammgeschützten Polyamidzusammensetzungen zur Herstellung von Formkörpern in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Die Wandstärke der erfindungsgemäßen Formkörper kann typischerweise bis zu 10 mm betragen. Besonders geeignet sind Formkörper mit weniger als 1,5 mm Wandstärke, mehr bevorzugt von weniger als 1 mm Wandstärke und besonders bevorzugt von weniger als 0,5 mm Wandstärke.

Die nachfolgenden Beispiele erläutern die Erfindung ohne diese zu begrenzen.

1. Eingesetzte Komponenten

Handelsübliche Polyamide (Komponente A):

Polyamid 6.6 (PA 6.6-GV; Schmelzbereich von 255-260 °C): Ultramid® A27 (BASF)
Polyamid 6 (Schmelzbereich von 217-222 °C): Durethan® B29 (Lanxess)
Polyamid 6T/6.6 (Schmelzbereich von 310-320 °C): Vestamid® HT plus 1000 (Evonik)

Glasfasern (Komponente B):
Glasfasern PPG HP 3610 10μm Durchmesser, 4,5 mm Länge (Fa. PPG, NL),

Flammschutzmittel FM 1 (Komponenten C, D und E):
Aluminiumsalz der Diethylphosphinsäure enthaltend 0,9 mol % an Aluminium-Ethylbutylphospinat und 0,5 mol % an Aluminium-Ethylphosphonat hergestellt nach Beispiel 3 der US 7,420,007 B2

Flammschutzmittel FM 2 (Komponenten C, D und E):

Aluminiumsalz der Diethylphosphinsäure enthaltend 2,7 mol % an Aluminium-Ethylbutylphospinat und 0,8 mol % an Aluminium-Ethylphosphonat hergestellt nach Beispiel 4 der US 7,420,007 B2

Flammschutzmittel FM 3 (Komponenten C, D und E):
Aluminiumsalz der Diethylphosphinsäure enthaltend 0,5 mol % an Aluminium-Ethylbutylphospinat und 0,05 mol % an Aluminium-Ethylphosphonat hergestellt nach dem Verfahren gemäß US 7,420,007 B2

Flammschutzmittel FM 4 (Komponenten C, D und E):
Aluminiumsalz der Diethylphosphinsäure enthaltend 10 mol % an Aluminium-Ethylbutylphospinat und 5 mol % an Aluminium-Ethylphosphonat hergestellt nach dem Verfahren gemäß US 7,420,007 B2

Flammschutzmittel FM 5 (Komponente C):
Aluminiumsalz der Diethylphosphinsäure hergestellt in Analogie zu Beispiel 1 der DE 196 07 635 A1

Flammschutzmittel FM 6 (Komponenten C und E):
Aluminiumsalz der Diethylphosphinsäure enthaltend 8,8 mol % an Aluminium-Ethylphosphonat

Flammschutzmittel FM 7 (Komponente H):

Aluminiumsalz der Phosphonsäure hergestellt nach Beispiel 1 der DE 102011120218 A1

Flammschutzmittel FM 8 (Komponente F):
Melamin-Polyphosphat hergestellt nach dem Beispiel der WO 2000/002869 A1 Flammschutzmittel FM 9 (nicht erfindungsgemäß):
Melamin-Polyphosphat mit einem mittleren Kondensationsgrad von 18 hergestellt in Analogie zu WO 2000/002869 A1

Flammschutzmittel FM 10 (nicht erfindungsgemäß):
Roter Phosphor (Exolit® RP 607, Clariant)

Flammschutzmittel FM 11 (nicht erfindungsgemäß):
Brompolystyrol (Saytex® HP 3010, Fa. Albemarle) gemischt mit Antimontrioxid Masterbatch 80 % in PA 6 (Fa. Campine) im Verhältnis 75%:25%

Graues Farbmittel (Komponente G)

Pigmentgranulat in Polyamid, Elektrograu RAL 7032 (Fa. Lifocolor, Lichtenfels, D)

2. Herstellung, Verarbeitung und Prüfung von flammhemmenden Polyamid-Formmassen

Die Flammschutzmittelkomponenten wurden in dem in den Tabellen angegebenen Verhältnissen mit dem Farbmittel vermischt und über den Seiteneinzug eines Doppelschnecken-Extruders (Typ Leistritz ZSE 27/44D) bei Temperaturen von 260 bis 310 °C in PA 6.6 bzw. bei 250 bis 275 °C in PA 6 bzw. bei 310 bis 330 °C PA 6T/6.6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 320 °C zu Prüfkörpern verarbeitet und anhand des UL 94-Tests (Underwriter Laboratories) auf Flammwidrigkeit geprüft und klassifiziert. Neben der Klassifikation wurde auch die Nachbrennzeit angegeben.

Der Comparative Tracking Index der Formteile wurde gemäß dem International Electrotechnical Commission Standard IEC-60112/3 ermittelt.

Der Glow Wire Flammability Index (GWIT-Index) wurde nach der Norm IEC-60695-2-12 ermittelt.

Die Farbe des Formteils wurde visuell beurteilt. Dabei bedeuteten:

1 = Graufärbung ohne Rotstich, 2 = Graufärbung mit leichtem Rotstich und
3 = Graufärbung mit deutlichem Rotstich.

Sämtliche Versuche der jeweiligen Serie wurden, falls keine anderen Angaben gemacht wurden, aufgrund der Vergleichbarkeit unter identischen Bedingungen (wie Temperaturprogramme, Schneckengeometrien und Spritzgießparameter) durchgeführt.

Beispiele 1-5, 1a, 1b, 5a und Vergleichsbeispiele V1-V3 mit PA 6.6

Die Ergebnisse der Versuche mit PA 6.6-Formmassen sind in den in der nachfolgenden Tabelle aufgeführten Beispielen aufgelistet. Alle Mengen sind als Gew.-% angegeben und beziehen sich auf die Polyamid-Formmasse

einschließlich der Flammschutzmittel, Additive und Verstärkungsstoffe.

Tabelle 1: PA 6.6 GF 30 Versuchsergebnisse (1-4, 1a und 1b nicht beansprucht; 5 und 5a erfindungsgemäß; V1-V3 Vergleiche; n.b. = nicht bestimmt; na = nicht beansprucht)

| Beispiel Nr. | 1 (na) | 2 (na) | 3 (na) | 4 (na) | 5 | V1 | V2 | V3 | V4 | V5 | 1a (na) | 1b (na) | 5a |
|---|---|---|---|---|---|---|---|---|---|---|---|---|---|
| A: Polyamid 6.6 | 51 | 52,5 | 51 | 48 | 51 | 51 | 51 | 51 | 51 | 51 | 51 | 48 | 48 |
| B: GF, HP3610 | 30 | 30 | 30 | 30 | 30 | 30 | 30 | 30 | 30 | 30 | 30 | 30 | 30 |
| C+D+E: FM 1 | 12 | - | - | - | - | - | - | - | - | - | 8 | 16 | - |
| C+D+E: FM 2 | - | 12 | - | - | 10 | - | 12 | - | - | - | - | - | 10 |
| C+D+E: FM 3 | - | - | 12 | - | - | - | - | - | - | - | - | - | - |
| C+D+E: FM 4 | - | - | - | 12 | - | - | - | - | - | - | - | - | - |
| C: FM 5 | - | - | - | - | - | - | - | - | - | 12 | - | - | - |
| C+E: FM 6 | - | - | - | - | - | 12 | - | - | - | - | - | - | - |
| H: FM 7 | - | - | - | - | 2 | - | - | - | - | - | - | - | 5 |
| F: FM 8 | 5 | 5 | 5 | 5 | 5 | 5 | - | 5 | 5 | 5 | 9 | 4 | 5 |
| Vergleich: FM 9 | - | - | - | - | - | - | 5 | - | - | - | - | - | - |
| Vergleich: FM 10 | - | - | - | - | - | - | - | 12 | - | - | - | - | - |
| Vergleich: FM 11 | - | - | - | - | - | - | - | - | 12 | - | - | - | - |
| G: | 2 | 0,5 | 2 | 5 | 2 | 2 | 2 | 2 | 2 | 2 | 2 | 2 | 2 |
| UL 94 0,4 mm / Zeit [sek.] | V-0/25 | V-0/20 | V-0/25 | V-0/40 | V-0/10 | V-0/45 | n.b. | V-0/40 | V-0/35 | V-0/50 | V-0/28 | V-0/28 | V-0/10 |
| GWFI [ °C] | 960 | 960 | 960 | 960 | 960 | 960 | n.b. | 850 | 900 | 960 | 960 | 960 | 960 |
| CTI [Volt] | 600 | 600 | 600 | 600 | 600 | 500 | n.b. | 600 | 450 | 500 | 600 | 600 | 600 |
| Farbe | 1 | 1 | 1 | 1 | 1 | 1 | n.b. | 3 | 2 | 1 | 1 | 1 | 1 |

Die Polyamidzusammensetzungen der Beispiele 1 bis 5, 1a, 1b und 5a sind Formmassen, welche die Brandklasse UL 94 V-0 bei 0,4 mm erreichen, gleichzeitig CTI 600 Volt und GWFI 960 °C aufweisen, und eine durchgehend graue Einfärbung ohne irgendeinen Rotstich zeigen. Der Zusatz von Komponente H in den erfindungsgemäßen Beispielen 5 und 5a führt zu einer nochmaligen Verbesserung des Flammschutzes ausgedrückt durch eine verringerte Nachbrennzeit.

Das Weglassen von Komponente D in Vergleichsbeispiel V1 hatte neben einer verlängerten Nachbrennzeit eine im Vergleich zu den Beispielen 1-4 Verringerung des CTI-Wertes zur Folge.

Das Ersetzen von Komponente F durch eine Komponente mit niedrigerem Kondensationsgrad in Vergleichsbeispiel V2 hatte zur Folge, dass der Polyamidstrang bei der Herstellung aufschäumte und keine Messungen vorgenommen werden konnten.

Der Einsatz von rotem Phosphor anstelle von Komponenten C, D und E in Vergleichsbeispiel V3 führte zu einem deutlichen Rotstich bei der Farbe der Formkörper.

Der Einsatz von Brompolystyrol / Antimontrioxid Masterbatch in PA 6 anstelle von Komponenten C, D und E in Vergleichsbeispiel V4 führte ebenfalls zu einem deutlichen Rotstich bei der Farbe der Formkörper. Außerdem verringerte sich der CTI-Wert deutlich.

Das Weglassen von Komponenten D und E in Vergleichsbeispiel V5 hatte neben einer verlängerten Nachbrennzeit eine im Vergleich zu den Beispielen 1-4 Verringerung des CTI-Wertes zur Folge.

Beispiele 6-10 und Vergleichsbeispiele V6-V10 mit PA 6.6/PA 6

Die Ergebnisse der Versuche mit PA 6/PA6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

Tabelle 2: PA 6/PA 6.6 GF 30 Versuchsergebnisse (6-9 nicht beansprucht; 10 erfindungsgemäß; V6-V10 Vergleiche; n.b. = nicht bestimmt)

| Beispiel Nr. | 6 (na) | 7 (na) | 8 (na) | 9 (na) | 10 | V6 | V7 | V8 | V9 | V10 |
|---|---|---|---|---|---|---|---|---|---|---|
| A: Polyamid 6.6 | 36 | 36 | 36 | 36 | 36 | 36 | 36 | 36 | 36 | 36 |
| A: Polyamid 6 | 15 | 15 | 15 | 15 | 15 | 15 | 15 | 15 | 15 | 15 |
| B: GF, HP3610 | 30 | 30 | 30 | 30 | 30 | 30 | 30 | 30 | 30 | 30 |
| C+D+E: FM 1 | 12 | - | - | - | - | - | - | - | - | - |
| C+D+E: FM 2 | - | 12 | - | - | 10 | - | 12 | - | - | - |
| C+D+E: FM 3 | - | - | 12 | - | - | - | - | - | - | - |
| C+D+E: FM 4 | - | - | - | 12 | - | - | - | - | - | - |
| C: FM 5 | - | - | - | - | - | - | - | - | - | 12 |
| C+E: FM 6 | - | - | - | - | - | 12 | - | - | - | - |
| H: FM 7 | - | - | - | - | 2 | - | - | - | - | - |
| F: FM 8 | 5 | 5 | 5 | 5 | 5 | 5 | - | 5 | 5 | 5 |
| Vergleich: FM 9 | - | - | - | - | - | - | 5 | - | - | - |
| Vergleich: FM 10 | - | - | - | - | - | - | - | 12 | - | - |
| Vergleich: FM 11 | - | - | - | - | - | | | | 12 | - |
| G | 2 | 2 | 2 | 2 | 2 | 2 | 2 | 2 | 2 | 2 |
| UL 94 0,4 mm / Zeit [sek.] | V-0/29 | V-0/23 | V-0/44 | V-0/28 | V-0/14 | V-0/47 | n.b. | V-0/50 | V-0/35 | V-0/50 |
| GWFI [ °C] | 960 | 960 | 960 | 960 | 960 | 960 | n.b. | 850 | 900 | 960 |
| CTI [Volt] | 600 | 600 | 600 | 600 | 600 | 500 | n.b. | 600 | 450 | 500 |
| Farbe | 1 | 1 | 1 | 1 | 1 | 1 | n.b. | 3 | 2 | 1 |

Die Polyamidzusammensetzungen der Beispiele 6 bis 10 sind Formmassen, welche die Brandklasse UL 94 V-0 bei 0,4 mm erreichen, gleichzeitig CTI 600 Volt und GWFI 960 °C aufweisen, und eine durchgehend graue Einfärbung

ohne irgendeinen Rotstich zeigen. Der Zusatz von Komponente H im erfindungsgemäßen Beispiel 10 führt zu einer nochmaligen Verbesserung des Flammschutzes ausgedrückt durch eine verringerte Nachbrennzeit.

Das Weglassen von Komponente D in Vergleichsbeispiel V6 hatte neben einer verlängerten Nachbrennzeit eine im Vergleich zu den Beispielen 6-9 Verringerung des CTI-Wertes zur Folge.

Das Ersetzen von Komponente F durch eine Komponente mit niedrigerem Kondensationsgrad in Vergleichsbeispiel V7 hatte zur Folge, dass der Polyamidstrang bei der Herstellung aufschäumte und keine Messungen vorgenommen werden konnten.

Der Einsatz von rotem Phosphor anstelle von Komponenten C, D und E in Vergleichsbeispiel V8 führte zu einem deutlichen Rotstich bei der Farbe der Formkörper.

Der Einsatz von Brompolystyrol / Antimontrioxid Masterbatch in PA 6 anstelle von Komponenten C, D und E in Vergleichsbeispiel V9 führte ebenfalls zu einem deutlichen Rotstich bei der Farbe der Formkörper. Außerdem verringerte sich der CIT-Wert deutlich.

Das Weglassen von Komponenten D und E in Vergleichsbeispiel V10 hatte neben einer verlängerten Nachbrennzeit eine im Vergleich zu den Beispielen 6-9 Verringerung des CTI-Wertes zur Folge.

Vergleichsbeispiele V11-V17 mit PA 6T/6.6

Die Ergebnisse der Versuche mit PA 6T/6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Flammschutzmittel, Additive und Verstärkungsstoffe.

Tabelle 3: PA 6T/6.6 GF 30 Versuchsergebnisse (n.b. = nicht bestimmt)

| Beispiel Nr. | V11 | V12 | V13 | V14 | V15 | V16 | V17 |
|---|---|---|---|---|---|---|---|
| A: Polyamid 6T/6.6 | 51 | 51 | 51 | 51 | 51 | 51 | 51 |
| B: Glasfasern HP361 | 30 | 30 | 30 | 30 | 30 | 30 | 30 |
| C+D+E: FM 1 | 12 | - | - | - | - | - | - |
| C+D+E: FM 2 | - | 12 | - | - | 10 | - | - |
| C+D+E: FM 3 | - | - | 12 | - | - | - | - |
| C+D+E: FM 4 | - | - | - | 12 | - | - | - |
| C: FM 5 | - | - | - | - | - | - | 12 |
| H: FM 7 | - | - | - | - | 2 | - | - |
| F: FM 8 | 5 | 5 | 5 | 5 | 5 | 5 | 5 |
| Vergleich: FM 10 | - | - | - | - | - | 12 | - |
| G: | 2 | 2 | 2 | 2 | 2 | 2 | 2 |
| UL 94 0,4 mm / Zeit [sek.] | n.b. | n.b. | n.b. | n.b. | n.b. | n.b. | n.b. |
| GWFI [ °C] | n.b. | n.b. | n.b. | n.b. | n.b. | n.b. | n.b. |
| MVR [$cm^3$/10 min.] | n.b. | n.b. | n.b. | n.b. | n.b. | n.b. | n.b. |
| Farbe | n.b. | n.b. | n.b. | n.b. | n.b. | n.b. | n.b. |
| CTI [Volt] | n.b. | n.b. | n.b. | n.b. | n.b. | n.b. | n.b. |

Aus keiner der PA-Formmassen der Vergleichsbeispiele V11-V17 konnten Prüfkörper hergestellt werden, da sich die PA-Formmassen als nicht verarbeitbar erwiesen. Die Polyamidstränge schäumten bei der Herstellung auf und es konnten keine für die Messungen geeigneten Prüfkörper hergestellt werden.

Vergleichsbeispiele V18-V22 mit PA 6.6

Aus Tabelle 4 geht hervor, dass nur mit der erfindungsgemäßen Kombination von Flammschutzmitteln Polyamidzusammensetzungen hergestellt werden können, welche die Eigenschaften V-0, GWFI 960, CTI 600 und graue Farbe ohne Rotstich aufweisen. Mit Melaminpolyphosphat allein oder mit Brompolystyrol mit Antimontrioxid kann zwar V-0, aber keine tief graue Einfärbung eingestellt werden.

Tabelle 4: Vergleichsbeispiele Polyamid 6.6 GF Ergebnisse

| (n.k. = nicht klassifizierbar) | | | | | |
|---|---|---|---|---|---|
| Beispiel Nr. | V18 | V19 | V20 | V21 | V22 |
| A: Polyamid 6.6 | 43 | 51 | 43 | 51 | 43 |
| B: Glasfasern HP361 | 30 | 30 | 30 | 30 | 30 |
| Vergleich: FM 8 | 25 | 17 | 5 | 5 | 5 |
| Vergleich: FM 9 | - | - | 25 | 17 | - |
| Vergleich: FM 11 | | | | | 25 |
| G: | 2 | 2 | 2 | 2 | 2 |
| UL 94 0,4 mm / Zeit [sek.] | V-0/45 | n.k. | V-0/43 | n.k. | V-0/23 |
| GWFI [ °C] | 960 | 750 | 960 | 700 | 960 |
| Farbe | 2 | 2 | 2 | 2 | 2 |
| CTI [Volt] | 500 | 500 | 350 | 500 | 350 |

**Patentansprüche**

1. Flammhemmende Polyamidzusammensetzungen enthaltend

- Polyamid mit einem Schmelzpunkt von kleiner gleich 290 °C als Komponente A,
- Füllstoffe und/oder Verstärkungsstoffe als Komponente B,
- Phosphinsäuresalz der Formel (I) als Komponente C

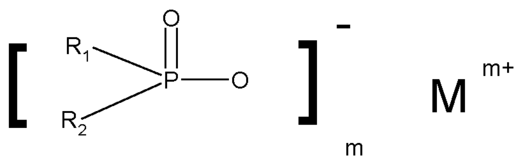

(I),

worin $R_1$ und $R_2$ Ethyl bedeuten,
M Al, Fe, $TiO_p$ oder Zn ist,
m 2 bis 3 bedeutet, und

$$p = (4 - m) / 2 \text{ ist}$$

- Verbindung ausgewählt aus der Gruppe der Al-, Fe-, $TiO_p$- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente D
- Phosphonsäuresalz der Formel II als Komponente E

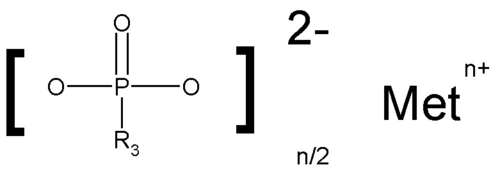

(II),

worin $R_3$ Ethyl bedeutet,
Met Al, Fe, $TiO_q$ oder Zn ist,
n 2 bis 3 bedeutet, und

$$q = (4 - n) / 2 \text{ ist}$$

- Melaminpolyphosphat mit einem mittleren Kondensationsgrad von 2 bis 200 als Komponente F,
- graues Farbmittel als Komponente G, und
- anorganisches Phosphonat als Komponente H.

**2.** Flammhemmende Polyamidzusammensetzungen nach Anspruch 1, **dadurch gekennzeichnet, dass** M und Met Al bedeuten, m und n 3 sind und dass Komponente D ein Aluminiumsalz ist.

**3.** Flammhemmende Polyamidzusammensetzungen nach mindestens einem der Ansprüche 1 bis 2, **dadurch gekennzeichnet, dass**

- der Anteil von Komponente A 25 bis 95 Gew.-%,
- der Anteil von Komponente B 1 bis 45 Gew.-%,
- der Anteil von Komponente C 1 bis 35 Gew.-%,
- der Anteil von Komponente D 0,01 bis 3 Gew.-%,
- der Anteil von Komponente E 0,001 bis 1 Gew.-%,
- der Anteil von Komponente F 1 bis 25 Gew.-%,
- der Anteil von Komponente G 0,01 bis 20 Gew.-%, und
- der Anteil von Komponente H 0,005 bis 10 Gew.-% beträgt,

wobei die Prozentangaben sich auf die Gesamtmenge der Polyamidzusammensetzung beziehen.

**4.** Flammhemmende Polyamidzusammensetzungen nach Anspruch 3, **dadurch gekennzeichnet, dass**

- der Anteil von Komponente A 25 bis 75 Gew.-%,
- der Anteil von Komponente B 20 bis 40 Gew.-%,
- der Anteil von Komponente C 5 bis 20 Gew.-%,
- der Anteil von Komponente D 0,05 bis 1,5 Gew.-%,
- der Anteil von Komponente E 0,01 bis 0,6 Gew.-%,
- der Anteil von Komponente F 2 bis 10 Gew.-%,
- der Anteil von Komponente G 0,1 bis 8 Gew.-%, und
- der Anteil von Komponente H 0,02 bis 5 Gew.-%, beträgt,

wobei die Prozentangaben sich auf die Gesamtmenge der Polyamidzusammensetzung beziehen.

**5.** Flammhemmende Polyamidzusammensetzungen nach Anspruch 1, **dadurch gekennzeichnet, dass** das anorganische Phosphonat eine Verbindung der Formel (III) ist

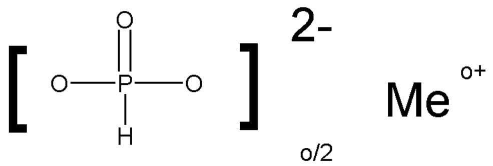

(III),

worin Me Fe, $TiO_r$, Zn oder insbesondere Al ist,
o 2 bis 3 bedeutet, und

$$r = (4 - o) / 2 \text{ ist,}$$

wobei die Verbindung der Formel III in einer Menge von 0,005 bis 10 Gew.-%, insbesondere in einer Menge von 0,02 bis 5 Gew.-%, bezogen auf die Gesamtmenge der Polyamidzusammensetzung, vorliegt.

**6.** Flammhemmende Polyamidzusammensetzungen nach mindestens einem der Ansprüche 1 bis 5, **dadurch gekennzeichnet, dass** sie einen Comparative Tracking Index aufweist gemessen nach der International Electrotechnical Commission Standard IEC-60112/3 von größer gleich 500 Volt aufweist.

7. Flammhemmende Polyamidzusammensetzungen nach mindestens einem der Ansprüche 1 bis 6, **dadurch gekennzeichnet, dass** sie eine Bewertung von V0 nach UL-94 von 3,2 mm bis 0,4 mm Dicke erreicht.

8. Flammhemmende Polyamidzusammensetzungen nach mindestens einem der Ansprüche 1 bis 7, **dadurch gekennzeichnet, dass** sie einen Glow Wire Flammability Index nach IEC-60695-2-12 von mindestens 960 °C bei 0,75 - 3 mm Dicke aufweist.

9. Flammhemmende Polyamidzusammensetzungen nach mindestens einem der Ansprüche 1 bis 8, **dadurch gekennzeichnet, dass** es sich bei Komponente A um ein oder mehrere Polyamide ausgewählt ist aus der Gruppe bestehend aus PA 6, PA 6.6, PA 4.6, PA 12, PA 6.10 handelt.

10. Flammhemmende Polyamidzusammensetzungen nach Anspruch 9, **dadurch gekennzeichnet, dass** es sich bei Komponente A um Polyamid 6.6 oder um Polymer-Gemische aus Polyamid 6.6 und Polyamid 6 handelt.

11. Flammhemmende Polyamidzusammensetzungen nach Anspruch 10, **dadurch gekennzeichnet, dass** Komponente A zu mindestens 75 Gew.-% aus Polyamid 6.6 und zu höchstens 25 Gew.-% aus Polyamid 6 besteht.

12. Flammhemmende Polyamidzusammensetzungen nach mindestens einem der Ansprüche 1 bis 11, **dadurch gekennzeichnet, dass** als Komponente B Glasfasern eingesetzt werden.

13. Flammhemmende Polyamidzusammensetzungen nach mindestens einem der Ansprüche 1 bis 12, **dadurch gekennzeichnet, dass** Komponenten C, D, E und F in Teilchenform vorliegen, wobei die mittlere Teilchengröße $d_{50}$ dieser Komponenten 1 bis 100 $\mu$m beträgt.

14. Flammhemmende Polyamidzusammensetzungen nach mindestens einem der Ansprüche 1 bis 13, **dadurch gekennzeichnet, dass** der durchschnittliche Kondensationsgrad des Melaminpolyphosphats 2 bis 100 beträgt.

15. Flammhemmende Polyamidzusammensetzungen nach mindestens einem der Ansprüche 1 bis 14, **dadurch gekennzeichnet, dass** das Melaminpolyphosphat eine Zersetzungstemperatur von größer gleich 320 °C aufweist.

16. Flammhemmende Polyamidzusammensetzungen nach mindestens einem der Ansprüche 1 bis 15, **dadurch gekennzeichnet, dass** Komponente G eine Abmischung schwarzer und weißer Pigmente oder Farbstoffe ist oder eine Abmischung von komplementärfarbigen Pigmenten oder Farbstoffen ist.

17. Flammhemmende Polyamidzusammensetzungen nach Anspruch 16, **dadurch gekennzeichnet, dass** Komponente G eine Abmischung weißer Pigmente mit schwarzen Pigmenten oder Farbstoffen ist, wobei die weißen Pigmente ausgewählt werden aus der Gruppe Zinkoxid, Zinksulfid, Bleiweiß, Lithopone, Antimonweiß, Bariumsulfat und/oder Titandioxid und wobei die schwarzen Pigmente oder Farbstoffe ausgewählt werden aus der Gruppe Ruß, Graphit, Graphen, Nigrosine, Knochenkohle, schwarze Farbpigmente oder aus Kombinationen komplementärfarbiger roter bis gelber Pigmente mit grünen, blauen oder violetten Pigmenten oder Mischungen von ein oder mehreren dieser Verbindungen.

18. Flammhemmende Polyamidzusammensetzungen nach mindestens einem der Ansprüche 1 bis 17, **dadurch gekennzeichnet, dass** diese weitere Additive als Komponente I enthält, wobei die weiteren Additive ausgewählt sind aus der Gruppe bestehend aus Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmitteln, Weichmachern, Verarbeitungshilfsmitteln, Schlagzähmodifikatoren, von Komponente G verschiedenen Farbstoffe, von Komponente G verschiedene Pigmenten und/oder weiteren Flammschutzmitteln, die sich von Komponenten C, D, E, F und H unterscheiden.

19. Verwendung der Polyamidzusammensetzungen nach einem der Ansprüche 1 bis 18 zur Herstellung von Fasern, Folien und Formkörpern, insbesondere für Anwendungen im Elektro- und Elektronikbereich.

## Claims

1. Flame-retardant polyamide compositions comprising

- polyamide having a melting point of not more than 290°C as component A,
- fillers and/or reinforcers as component B,
- phosphinic salt of the formula (I) as component C

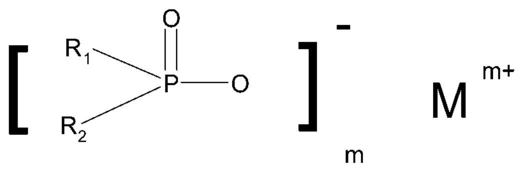 (I),

in which $R_1$ and $R_2$ are ethyl,
M is Al, Fe, $TiO_p$ or Zn,
m is 2 to 3, and

$$p = (4 - m) / 2$$

- compound selected from the group of the Al, Fe, $TiO_p$ and Zn salts of ethylbutylphosphinic acid, of dibutylphosphinic acid, of ethylhexylphosphinic acid, of butylhexylphosphinic acid and/or of dihexylphosphinic acid as component D
- phosphonic salt of the formula II as component E

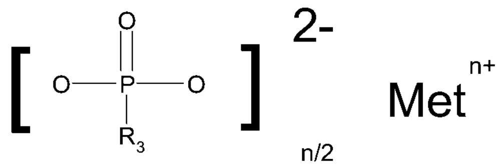 (II),

in which $R_3$ is ethyl,
Met is Al, Fe, $TiO_q$ or Zn,
n is 2 to 3, and

$$q = (4 - n) / 2$$

- melamine polyphosphate having an average degree of condensation of 2 to 200 as component F,
- gray colorant as component G, and
- inorganic phosphonate as component H.

**2.** Flame-retardant polyamide compositions according to Claim 1, **characterized in that** M and Met are Al, m and n are 3, and component D is an aluminum salt.

**3.** Flame-retardant polyamide compositions according to at least one of Claims 1 and 2, **characterized in that**

- the proportion of component A is 25% to 95% by weight,
- the proportion of component B is 1% to 45% by weight,
- the proportion of component C is 1% to 35% by weight,
- the proportion of component D is 0.01% to 3% by weight,
- the proportion of component E is 0.001% to 1% by weight,
- the proportion of component F is 1% to 25% by weight,
- the proportion of component G is 0.01% to 20% by weight, and
- the proportion of component H is 0.005% to 10% by weight,

where the percentages are based on the total amount of the polyamide composition.

**4.** Flame-retardant polyamide compositions according to Claim 3, **characterized in that**

- the proportion of component A is 25% to 75% by weight,
- the proportion of component B is 20% to 40% by weight,
- the proportion of component C is 5% to 20% by weight,
- the proportion of component D is 0.05% to 1.5% by weight,
- the proportion of component E is 0.01% to 0.6% by weight,
- the proportion of component F is 2% to 10% by weight,
- the proportion of component G is 0.1% to 8% by weight, and
- the proportion of component H is 0.02% to 5% by weight,

where the percentages are based on the total amount of the polyamide composition.

**5.** Flame-retardant polyamide compositions according to Claim 1, **characterized in that** the inorganic phosphonate is a compound of the formula (III)

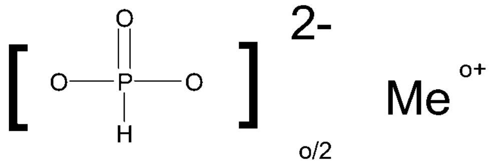

(III),

in which Me is Fe, $TiO_r$, Zn or especially Al,
o is 2 to 3, and

$$r = (4 - o) / 2,$$

where the compound of the formula III is present in an amount of 0.005% to 10% by weight, especially in an amount of 0.02% to 5% by weight, based on the total amount of the polyamide composition.

**6.** Flame-retardant polyamide compositions according to at least one of Claims 1 to 5, **characterized in that** they have a comparative tracking index measured according to International Electrotechnical Commission Standard IEC-60112/3 of not less than 500 volts.

**7.** Flame-retardant polyamide compositions according to at least one of Claims 1 to 6, **characterized in that** they attain a V-0 assessment according to UL-94 from thickness 3.2 mm to 0.4 mm.

**8.** Flame-retardant polyamide compositions according to at least one of Claims 1 to 7, **characterized in that** they have a glow wire flammability index according to IEC-60695-2-12 of not less than 960°C at thickness 0.75-3 mm.

**9.** Flame-retardant polyamide compositions according to at least one of Claims 1 to 8, **characterized in that** component A is one or more polyamides selected from the group consisting of PA 6, PA 6,6, PA 4,6, PA 12, PA 6,10.

**10.** Flame-retardant polyamide compositions according to Claim 9, **characterized in that** component A is nylon-6,6 or comprises polymer mixtures of nylon-6,6 and nylon-6.

**11.** Flame-retardant polyamide compositions according to Claim 10, **characterized in that** component A consists to an extent of at least 75% by weight of nylon-6,6 and to an extent of at most 25% by weight of nylon-6.

**12.** Flame-retardant polyamide compositions according to at least one of Claims 1 to 11, **characterized in that** glass fibers are used as component B.

**13.** Flame-retardant polyamide compositions according to at least one of Claims 1 to 12, **characterized in that** components C, D, E and F are in particulate form, where the median particle size $d_{50}$ of these components is 1 to 100 $\mu$m.

**14.** Flame-retardant polyamide compositions according to at least one of Claims 1 to 13, **characterized in that** the average degree of condensation of the melamine polyphosphate is 2 to 100.

**15.** Flame-retardant polyamide compositions according to at least one of Claims 1 to 14, **characterized in that** the melamine polyphosphate has a breakdown temperature of not less than 320°C.

**16.** Flame-retardant polyamide compositions according to at least one of Claims 1 to 15, **characterized in that** component G is a blend of black and white pigments or dyes or is a blend of complementary-colored pigments or dyes.

**17.** Flame-retardant polyamide compositions according to Claim 16, **characterized in that** component G is a blend of white pigments with black pigments or dyes, where the white pigments are selected from the group of zinc oxide, zinc sulfide, white lead, lithopone, antimony white, barium sulfate and/or titanium dioxide and where the black pigments or dyes are selected from the group of carbon black, graphite, graphene, nigrosins, bone charcoal, black color pigments or of combinations of complementary-colored red to yellow pigments with green, blue or violet pigments or mixtures of one or more of these compounds.

**18.** Flame-retardant polyamide compositions according to at least one of Claims 1 to 17, **characterized in that** they comprise further additives as component I, where the further additives are selected from the group consisting of antioxidants, UV stabilizers, gamma ray stabilizers, hydrolysis stabilizers, costabilizers for antioxidants, antistats, emulsifiers, nucleating agents, plasticizers, processing auxiliaries, impact modifiers, dyes other than component G, pigments other than component G and/or further flame retardants other than components C, D, E, F and H.

**19.** Use of the polyamide compositions according to any of Claims 1 to 18 for production of fibers, films and shaped bodies, especially for applications in the electricals and electronics sector.

## Revendications

**1.** Compositions ignifuges de polyamide, contenant

- du polyamide ayant un point de fusion inférieur ou égal à 290 °C comme composant A,
- des charges et/ou des substances de renforcement, comme composant B,
- un sel de l'acide phosphinique de formule (I), comme composant C

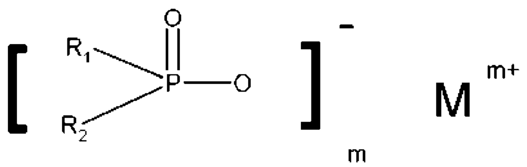

(I),

dans laquelle $R_1$ et $R_2$ signifient éthyle, M représente Al, Fe, $TiO_p$ ou Zn, m signifie 2 à 3 et

$$p = (4 - m) / 2,$$

- un composé choisi dans le groupe des sels d'Al, de Fe, de $TiO_p$ ou de Zn de l'acide éthylbutylphosphinique, de l'acide dibutylphosphinique, de l'acide éthylhexylphosphinique, de l'acide butylhexylphosphinique et/ou de l'acide dihexylphosphinique, comme que composant D
- un sel de l'acide phosphonique de formule II comme composant E

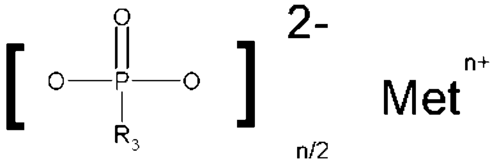

(II),

dans laquelle $R_3$ signifie éthyle,
Met représente Al, Fe, $TiO_q$ ou Zn,
n signifie 2 à 3 et

$$q = (4 - n) / 2$$

- du polyphosphate de mélamine présentant un degré moyen de condensation de 2 à 200, comme composant F,
- un colorant gris comme composant G, et
- un phosphonate inorganique comme composant H.

**2.** Compositions ignifuges de polyamide selon la revendication 1, **caractérisées en ce que** M et Met signifient Al, m et n représentent 3 et **en ce que** le composant D est un sel d'aluminium.

**3.** Compositions ignifuges de polyamide selon au moins l'une des revendications 1 à 2, **caractérisées en ce que**

- la proportion du composant A est de 25 à 95 % en poids,
- la proportion du composant B est de 1 à 45 % en poids,
- la proportion du composant C est de 1 à 35 % en poids,
- la proportion du composant D est de 0,01 à 3 % en poids,
- la proportion du composant E est de 0,001 à 1 % en poids,
- la proportion du composant F est de 1 à 25 % en poids,
- la proportion du composant G est de 0,01 à 20 % en poids,
- la proportion du composant H est de 0,005 à 10 % en poids,

les pourcentages se rapportant à la quantité totale de la composition de polyamide.

**4.** Compositions ignifuges de polyamide selon la revendication 3, **caractérisées en ce que**

- la proportion du composant A est de 25 à 75 % en poids,
- la proportion du composant B est de 20 à 40 % en poids,
- la proportion du composant C est de 5 à 20 % en poids,
- la proportion du composant D est de 0,05 à 1,5 % en poids,
- la proportion du composant E est de 0,01 à 0,6 % en poids,
- la proportion du composant F est de 2 à 10 % en poids,
- la proportion du composant G est de 0,1 à 8 % en poids,
- la proportion du composant H est de 0,02 à 5 % en poids,

les pourcentages se rapportant à la quantité totale de la composition de polyamide.

**5.** Compositions ignifuges de polyamide selon la revendication 1, **caractérisées en ce que** le phosphonate inorganique est un composé de formule (III)

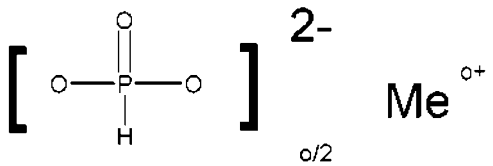 (III),

dans laquelle Me représente Fe, $TiO_r$, Zn ou en particulier Al,
o signifie 2 à 3 et

$$r = (4 - o) / 2,$$

le composé de formule III étant présent en une quantité de 0,005 à 10 % en poids, notamment en une quantité de 0,02 à 5 % en poids, par rapport à la quantité totale de la composition polyamide.

**6.** Compositions ignifuges de polyamide selon au moins l'une des revendications 1 à 5, **caractérisées en ce qu'**elles présentent un indice de résistance au cheminement, mesuré selon la norme de la Commission électrotechnique internationale CEI-60112/3, supérieur ou égal à 500 Volts.

**7.** Compositions ignifuges de polyamide selon au moins l'une des revendications 1 à 6, **caractérisées en ce qu'**elles

atteignent un classement de V0 selon UL-94 pour une épaisseur de 3,2 mm à 0,4 mm.

**8.** Compositions ignifuges de polyamide selon au moins l'une des revendications 1 à 7, **caractérisées en ce qu'**elles présentent un indice d'inflammabilité au fil incandescent selon la norme CEI-60695-2-12 d'au moins 960°C pour une épaisseur de 0,75-3 mm.

**9.** Compositions ignifuges de polyamide selon au moins l'une des revendications 1 à 8, **caractérisées en ce qu'**il s'agit, pour le composant A, d'un ou de plusieurs polyamides choisis dans le groupe constitué par PA 6, PA 6.6, PA 4.6, PA 12, PA 6.10.

**10.** Compositions ignifuges de polyamide selon la revendication 9, **caractérisées en ce qu'**il s'agit, pour le composant A, de polyamide 6.6 ou de mélanges polymères de polyamide 6.6 et de polyamide 6.

**11.** Compositions ignifuges de polyamide selon la revendication 10, **caractérisées en ce que** le composant A est constitué à raison d'au moins 75% en poids de polyamide 6.6 et d'au plus 25% en poids de polyamide 6.

**12.** Compositions ignifuges de polyamide selon au moins l'une des revendications 1 à 11, **caractérisées en ce que** des fibres de verre sont utilisées comme composant B.

**13.** Compositions ignifuges de polyamide selon au moins l'une des revendications 1 à 12, **caractérisées en ce que** les composants C, D, E et F se présentent sous forme de particules, la taille moyenne $d_{50}$ des particules de ces composants étant de 1 à 100 $\mu$m.

**14.** Compositionside ignifuges de polyam selon au moins l'une des revendications 1 à 13, **caractérisées en ce que** le degré de condensation moyen du polyphosphate de mélamine est de 2 à 100.

**15.** Compositions ignifuges de polyamide selon au moins l'une des revendications 1 à 14, **caractérisées en ce que** le polyphosphate de mélamine présente une température de décomposition supérieure ou égale à 320°C.

**16.** Compositions ignifuges de polyamide selon au moins l'une des revendications 1 à 15, **caractérisées en ce que** le composant G est un mélange de pigments ou de colorants noirs et blancs ou un mélange de pigments ou de colorants de couleurs complémentaires.

**17.** Compositions ignifuges de polyamide selon la revendication 16, **caractérisées en ce que** le composant G est un mélange de pigments blancs avec des pigments ou des colorants noirs, les pigments blancs étant choisis dans le groupe constitué par l'oxyde de zinc, le sulfure de zinc, le blanc de plomb, le lithopone, le blanc d'antimoine, le sulfate de baryum et/ou le dioxyde de titane, et les pigments ou colorants noirs étant choisis dans le groupe constitué par le noir de carbone, le graphite, le graphène, la nigrosine, le charbon d'os, les pigments colorés noirs ou des combinaisons de pigments de couleur complémentaire rouge à jaune avec des pigments verts, bleus ou violets ou des mélanges d'un ou plusieurs de ces composés.

**18.** Compositions ignifuges de polyamide selon au moins l'une des revendications 1 à 17, **caractérisées en ce qu'**elles contiennent d'autres additifs comme composant I, les autres additifs étant choisis dans le groupe constitué par les antioxydants, les stabilisateurs UV, les stabilisateurs aux rayons gamma, les stabilisateurs d'hydrolyse, les co-stabilisateurs pour antioxydants, les agents antistatiques, les émulsifiants, les agents de nucléation, les plastifiants, les adjuvants d'usinage, les modificateurs de résistance aux chocs, les colorants différents du composant G, les pigments différents du composant G et/ou d'autres agents ignifuges qui diffèrent des composants C, D, E, F et H.

**19.** Utilisation des compositions de polyamide selon l'une des revendications 1 à 18 pour la fabrication de fibres, de feuilles et de corps moulés, en particulier pour des utilisations dans le domaine électrique et électronique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2252258 A
- DE 2447727 A
- WO 200228953 A1
- DE 19734437 A1
- DE 19737727 A1
- US 7420007 B2
- WO 2014135256 A1
- WO 2010089241 A1
- EP 1121388 B1
- DE 4301541 A1
- WO 2014044471 A1
- WO 2012045414 A1
- WO 2016065971 A1
- DE 102005016195 A1
- WO 2006027340 A1
- EP 1789475 B1
- WO 2000002869 A1
- EP 1095030 B1
- DE 4104681 A1
- JP 2004204194 A
- DE 102007036465 A
- EP 3133112 A
- DE 19607635 A1
- DE 102011120218 A1


### In der Beschreibung aufgeführte Nicht-Patentliteratur


- *CHEMICAL ABSTRACTS*, 15099-32-8
- **HANS DOMININGHAUS**. Die Kunststoffe und ihre Eigenschaften. *Auflage*, 1998, vol. 5, 14
- **RÖMPPS CHEMIE LEXIKON**. *Auflage*, 1981, vol. 8, 1237
- **B. R. GÄCHTER** ; **H. MÜLLER**. Taschenbuch der Kunststoffadditive. Carl Hanser Verlag, 1983, 494-510